(19) Europäisches Patentamt

European Patent Office

Office européen des brevets

(11) **EP 0 671 402 B1**

## (12) EUROPÄISCHE PATENTSCHRIFT

(45) Veröffentlichungstag und Bekanntmachung des Hinweises auf die Patenterteilung:
**06.05.1999 Patentblatt 1999/18**

(51) Int. Cl.$^6$: **C07F 7/16**, B01J 23/84

(21) Anmeldenummer: **95103399.2**

(22) Anmeldetag: **09.03.1995**

(54) **Verfahren zur Herstellung von Methylchlorsilanen**

Process for the preparation of methylchlorosilanes

Procédé pour la préparation de méthyl-chlorosilanes

(84) Benannte Vertragsstaaten:
**DE ES FR GB**

(30) Priorität: **10.03.1994 DE 4408113**

(43) Veröffentlichungstag der Anmeldung:
**13.09.1995 Patentblatt 1995/37**

(73) Patentinhaber:
**Wacker-Chemie GmbH**
**81737 München (DE)**

(72) Erfinder:
- **Kalchauer, Wilfried, Dr.**
  **D-84489 Burghausen (DE)**
- **Pachaly, Bernd, Dr.**
  **D-84489 Burghausen (DE)**
- **Straussberger, Herbert**
  **D-84561 Mehring (DE)**
- **Streckel, Willi**
  **D-84561 Mehring (DE)**

(56) Entgegenhaltungen:
**EP-A- 0 138 679          EP-A- 0 440 414**
**EP-A- 0 470 020          US-A- 4 500 724**
**US-A- 4 504 596**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von Methylchlorsilanen durch Umsetzung von Methylchlorid mit Silicium in Gegenwart einer Katalysatorkombination aus Kupferoxid, Zinkoxid und metallischem Antimon.

Verfahren zur Herstellung von Methylchlorsilanen durch Umsetzung von Silicium mit Methylchlorid (Direktsynthese) in Gegenwart von geeigneten Katalysatoren und Katalysatorkombinationen sind bereits bekannt. Beispielsweise ist in US-Re. 33,452 ein Direktsyntheseverfahren mit einer Katalysatorkombination aus den Elementen oder den Verbindungen von Kupfer, Zink und Zinn beschrieben. Das Mengenverhältnis der Katalysatoren Kupfer, Zink und Zinn zueinander hat in dem Verfahren einen starken Einfluß auf das Verfahren, insbesondere auf die Produktivität und die Selektivität, während die Form, wie Metall, Legierungen oder Verbindungen, in der die Katalysatoren in die Kontaktmasse eingebracht werden von untergeordneter Bedeutung ist. Ferner werden mit Zinn als Katalysator relativ geringe Produktionsraten erzielt.

In D.I. Lainer et al., Chemical Abstracts 57, 6669g 1962 ist ein Direktsyntheseverfahren beschrieben, bei dem eine Silicium-Kupfer-Legierung mit Zink und Antimon als Katalysatoren eingesetzt wird. Falls Kupfer nicht bereits bei der Siliciumherstellung einlegiert wird ist die Herstellung von Silicium-Kupfer-Legierungen energieintensiv und benötigt zusätzliche Anlagen. Da das Verhältnis Silicium : Kupfer durch diese Legierungen vorgegeben ist, ist die Silansynthese schwerer steuerbar. Veränderungen des Verhältnisses Si : Cu in der Kontaktmasse während der Reaktion können nicht entsprechend rasch ausgeglichen werden. Beim Einsatz von metallischem Kupfer werden im Vergleich zu Kupferoxiden geringere Silanproduktionsraten (Silan pro Masse Silicium und Zeiteinheit) erzielt. Silicium-Kupferoxid-Legierungen sind jedoch auf Grund der elektrochemischen Spannungsreihe nicht herstellbar und instabil.

Kupfer wird neben Kupfer-Siliciumlegierungen meist in Form von metallischem Kupfer, Kupferchlorid, Kupferformiat oder Kupferoxalat eingesetzt. Die Herstellung dieser Kupferverbindungen in relativ reiner Form und geeigneten Korngrößen, ist energie- und kostenintensiv. Ein Recycling von verbrauchtem Kupfer zur Rückführung in die Ausgangsverbindung ist relativ teuer. Kupferformiat und -oxalat sind thermisch labil, d. h., sie können sich bei thermischer Belastung spontan zersetzen. Beim Einsatz von Kupferchlorid kommt es durch die Zersetzung von Methylchlorid zu einer verstärkten Teer- und Rußbildung auf der Kontaktmasse und dadurch zu einer Verminderung der Reaktivität. Metallisches Kupfer hat den Nachteil, daß es duktil ist und dadurch mechanisch nur schlecht zu einem Pulver mit geeigneter Korngröße und Oberfläche zerkleinert werden kann. Ein weiterer Nachteil von metallischen Kupferkatalysatoren ist in einer geringeren Selektivität bezüglich Dimethyldichlorsilan zu sehen. Beispielsweise ist der Einsatz von Kupferoxalat in der Direktsynthese zusammen mit elementarem Zink und Antimon in der DD-A-293 506 beschrieben.

In Lieske et. al, Xth Intern. Symposium on Organosilicon Chemistry 1993 Poznan, Polen; Abstract Seite 209 ist ein Direktsyntheseverfahren beschrieben, bei dem eine Kombination von Kupferoxid mit Zink und Antimon als Katalysator eingesetzt wird. Metallisches Zink kann bei der Kontaktmassenzubereitung spontan mit den zugesetzten Kupferverbindungen, wie Kupferoxiden eine exotherme Redoxreaktion eingehen, wodurch die prozeßsicherheit gefährdet wird. Bei der Reaktion der Kontaktmasse mit Methylchlorid wird metallisches Zink zu $ZnCl_2$ oxidiert. $ZnCl_2$ ist bei den Temperaturen, bei denen die Methylchlorsilansynthese abläuft, teilweise flüchtig. Deshalb wird $ZnCl_2$ während der Reaktion aus der Kontaktmasse ausgetragen und scheidet sich an kalten Anlagenteilen ab oder wird mit dem Silanstrom ausgetragen. Ebenso erfolgt beim Einsatz von metallischem Zink oder $ZnCl_2$ während der Reaktion mit Methylchlorid eine starke Abreicherung dieser Komponente in der Kontaktmasse. Um jedoch die Produktivität des Verfahrens aufrechtzuerhalten, ist eine entsprechende Nachdosierung dieser Komponente erforderlich, gleichzeitig kommt es zu einer Anreicherung von nicht erwünschten Anteilen an Zinkverbindungen im Silan, an Anlagenteilen und in Reaktionsstäuben.

In US-A-4,645,851 und US-A-4,661,613 sind Direktsyntheseverfahren in Gegenwart einer Katalysatorkombination aus Kupferoxid, Zinkoxid, metallischem Antimon und eines Zusatzes von weiterem Alkali- oder Erdalkalimetall oder Metallverbindung, wie Cäsiumchlorid, Calciumchlorid oder Bariumcarbonat vorgeschlagen, jedoch nur mit einer Katalysatorkombination aus Kupferoxid, Zinkoxid, metallischem Zinn und einem Zusatz durchgeführt worden. Der Nachteil von derartigen Zusätzen ist, daß sie meist in relativ hohen Konzentrationen eingesetzt werden müssen, um entsprechende Effekte hervorzurufen, daß die meisten Zusätze relativ teuer sind und nach der Umsetzung entsprechend wiedergewonnen oder deponiert werden müssen. Beispielsweise ist zur Erzielung einer hohen Dimethyldichlorsilanselektivität und zur Steigerung der Produktivität ein hoher Gehalt an Cäsiumchlorid erforderlich.

Aufgabe der Erfindung war es, ein Verfahren zur Herstellung von Methylchlorsilanen durch Umsetzung von Methylchlorid mit Silicium bereitzustellen, wobei bei diesem Verfahren eine relativ hohe Produktionsrate und eine relativ hohe Selektivität an Dimethyldichlorsilan angestrebt wird, ohne daß durch weitere Zusätze Probleme wie Verteuerung des Verfahrens oder Entsorgung bzw. Recycling der Zusätze nach Beendigung der Reaktion geschaffen werden.

Gegenstand der Erfindung ist ein Verfahren zur Herstellung von Methylchlorsilanen durch Umsetzung von Methylchlorid mit Silicium in Gegenwart einer Katalysatorkombination aus Kupferoxid, Zinkoxid und metallischem Antimon.

Durch das erfindungsgemäße Verfahren können höhere Silan-Produktionsraten erzielt werden, ohne daß eine zusätzliche Dosierung von weiteren Elementen oder Verbindungen erforderlich ist, bei gleichzeitigem Erhalt einer relativ hohen Dimethyldichlorsilanselektivität. Ein weiterer Vorteil der Erfindung ist, daß die als Kontaktmasse bezeichnete Reaktionsmischung aus Silicium und Katalysatoren auch bei höheren Temperaturen gefahrlos gehandhabt werden kann, und daß die Katalysatoren während der Reaktion in ausreichender Konzentration in der Kontaktmasse verbleiben.

Die vorliegende Erfindung beruht auf der Erkenntnis, daß beim System Silicium/Kupfer/Zink/Antimon auch die Form, in der die einzelnen Komponenten eingesetzt werden, einen großen Einfluß auf das Verfahren hat. So lassen sich beispielsweise mit ZnO im Vergleich zu Zn und $ZnCl_2$ höhere Produktionsraten erzielen, ein starkes Austragen von Zink aus der Kontaktmasse wird vermieden.

Das Verfahren wird bevorzugt in einem Wirbelschichtreaktor, vorzugsweise im Temperaturbereich von 250 bis 400 °C, insbesondere bei 250 bis 360 °C durchgeführt. Weil dies den geringsten Aufwand erfordert, wird das Verfahren meist beim Druck der umgebenen Atmosphäre (also bei etwa 0,1 MPa) bis 0,5 MPa durchgeführt, es können aber auch höhere Drücke angewandt werden.

Das Verfahren kann mit reinem Methylchlorid oder Methylchlorid/Inertgas-Mischungen durchgeführt werden, als Inertgas können beispielsweise Stickstoff oder Argon eingesetzt werden. Die Menge des Gasstromes wird in der bevorzugten Ausführungsform so gewählt, daß im Reaktor eine Wirbelschicht gebildet wird.

Das Verfahren kann kontinuierlich oder diskontinuierlich durchgeführt werden. Kontinuierlich bedeutet, daß die Mengen an abreagiertem Silicium und mit dem Reaktionstaub ausgetragene Katalysatoren kontinuierlich nachdosiert werden.

Methylchlorid oder Methylchlorid/Inertgas-Gemische werden bei einer bevorzugten Ausführungsform des erfindungsgemäßen Verfahrens kontinuierlich durch die Kontaktmasse geleitet, wodurch sich eine Wirbelschicht aufbaut. Nicht umgesetztes Methylchlorid und gegebenenfalls Inertgas und die gebildeten gasförmigen Methylchlorsilane verlassen den Reaktor. Über einen oder mehrere Cyclone kann man, falls erwünscht, die mitgerissenen Partikel vom Gasstrom abtrennen, wobei große mitgerissene Partikel aus der Kontaktmasse wieder in den Reaktor zurückgeführt werden. Das Silan wird anschließend von restlichen Staubanteilen und nicht umgesetztem Methylchlorid abgetrennt und einer Destillation zugeführt. Gereinigtes, nicht umgesetztes Methylchlorid kann wieder in den Reaktor eingespeist werden.

Aus den mitgerissenen und abgetrennten Partikeln, wie auch nach Beendigung der Reaktion aus dem Reaktorrückstand, kann gegebenenfalls das enthaltene Kupfer nach einem in US 5,306,328 beschriebenen Verfahren wiedergewonnen und auf einfache Weise in das eingesetzte Kupferoxid rückgeführt werden.

Beim erfindungsgemäßen Verfahren wird in einer bevorzugten Ausführungsform Silicium in einer Korngröße von kleiner 700 µm und größer 20 µm, besonders bevorzugt in einer Korngröße von kleiner 250 µm und größer 70 µm eingesetzt. Die durchschnittliche Korngröße der Siliciumpartikel liegt bevorzugt im Bereich von 100 bis 200 µm, besonders bevorzugt im Bereich von 130 bis 170 µm. Das eingesetzte Silicium weist üblicherweise einen Reinheitsgrad von >99 % auf.

Beim erfindungsgemäßen Verfahren wird Kupfer in Form von Kupferoxid-Gemischen oder in Form von Kupfer(II)oxid eingesetzt. Im Falle von Mischoxiden der allgemeinen Formel $CuO_x$ weist x einen Wert von 0,6 bis 1 auf, bevorzugt ist ein Wert von mindestens 0,7. Die eingesetzten Kupferoxide können einen geringen Anteil an Verunreinigungen wie beispielsweise Eisen, Blei, Zink, Aluminium, Titan, Alkali- oder Erdalkalimetalle oder Zinn aufweisen. Die Verunreinigungen überschreiten in Summe nicht 3 Gew.-%, wobei die Gesamtkonzentration an Blei höchstens 0,005 Gew.-% betragen darf, die Gesamtkonzentration an Alkalimetallen und Erdalkalimetallen jeweils höchstens 0,04 Gew.-%, die Gesamtkonzentration an Barium und Strontium höchstens 0,008 Gew.-% und die Gesamtkonzentration an Zinn höchstens 0,02 Gew.-% beträgt. Die Kupferoxide werden vorzugsweise in einer Korngröße von kleiner 25 µm eingesetzt, wobei die durchschnittliche Korngröße im Bereich von 10 bis 0,1 µm, bevorzugt im Bereich von 7 bis 1 µm und besonders bevorzugt im Bereich von 5 - 1 µm liegt. Die beschriebenen Kupferoxide können beispielsweise nach dem in US 5,306,328 beschriebenen Verfahren hergestellt werden, wobei der Oxidationsgrad durch die Trocknungstemperatur und die Verweilzeit bei dieser Temperatur gezielt eingestellt werden kann.

Vorzugsweise werden 0,5 bis 10 Gew.-%, insbesondere 0,7 bis 7 Gew.-% Kupferoxidkatalysator, bezogen auf eingesetztes Silicium verwendet, besonders bevorzugt sind 1 bis 5 Gew.-%.

Beim erfindungsgemäßen verfahren wird Zinkoxid vorzugsweise in einer Korngröße von kleiner 25 µm eingesetzt, wobei die durchschnittliche Korngröße im Bereich von 15 bis 0,1 µm, bevorzugt im Bereich von 10 bis 0,5 µm liegt. Das eingesetzte Zinkoxid weist vorzugsweise einen Gehalt von weniger als 0,005 Gew.-% Blei und weniger als 0,002 Gew.-% Zinn auf. Der Gesamtgehalt an Alkalimetallen und Erdalkalimetallen beträgt höchstens 0,04 Gew.-% und der Gesamtgehalt an Barium und Strontium höchstens 0,008 Gew.-%. Zinkoxid ist käuflich erhältlich z. B. bei Fluka Feinchemikalien GmbH, Deutschland. Die Menge an eingesetztem Zinkoxid beträgt vorzugsweise 0,5 bis 60 Gew.-%, insbesondere 2 bis 40 Gew.-% ZnO, bezogen auf Kupferoxid, besonders bevorzugt werden 5 bis 30 Gew.-% ZnO eingesetzt.

Beim erfindungsgemäßen Verfahren wird metallisches Antimon, vorzugsweise in einer Korngröße von kleiner 150 µm, eingesetzt. In einer bevorzugten Ausführungsform wird Antimonpulver mit einer Korngröße von höchstens 45 µm verwendet. Antimon in dieser Korngröße ist beispielsweise käuflich erhältlich bei Alfa-Johnson Matthey GmbH, Deutschland. Die Menge an eingesetztem Antimon beträgt vorzugsweise 200 bis 8000 ppm, insbesondere 300 bis 4000 ppm, bezogen auf das eingesetzte Kupferoxid, besonders bevorzugt werden 500 bis 2500 ppm Antimon eingesetzt.

Die Zubereitung der Kontaktmasse erfolgt durch einfaches Mischen der Einzelkomponenten bei Raumtemperatur. Eine anschließende thermische Behandlung der Kontaktmasse vor dem Einbringen in den Reaktionsreaktor ist möglich, wird aber in der bevorzugten Ausführungsform nicht durchgeführt.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20° C .

## Beispiele

## Beispiel 1

Die Ergebnisse bei Umsetzungen von Silicium mit Methylchlorid in Gegenwart von geeigneten Katalysatoren hängen neben der Zusammensetzung der Kontaktmassen auch vom Aufbau der Versuchsanlage, von der Versuchsdurchführung und vom eingesetzten Silicium ab. Um diese Parameter eliminieren zu können, und um die Vorteile der beschriebenen Erfindung eindeutig aufzeigen zu können, wurden verschiedene, in anderen Literaturstellen beschriebene Kontaktmassenzusammensetzungen auf der nachstehend erläuterten Versuchsanlage nach einer standardisierten Vorgangsweise mit Methylchlorid umgesetzt. Die dabei ermittelten Ergebnisse sind in den Vergleichsbeispielen und Beispielen wiedergegeben.

Eingesetztes Silicium:

Korngröße im Bereich von 70 - 250 µm
Mittlerer Korndurchmesser: 150 µm

Erhältlich unter der Bezeichnung "Silgrain"[®] bei Elkem, Norwegen.

Versuchsanlage:

Labor-Wirbelschichtreaktor, bestehend aus einem senkrechten Glasrohr mit einem Innendurchmesser von 25 mm und einer Höhe von 500 mm mit Heizwicklung, Gasverteilungsfritte, Destillationsbrücke mit Sole-Kühlung und Vorlagekolben.

Standardisierte Vorgangsweise:

120 g Silicium wurden zur Herstellung der Kontaktmasse mit den Katalysatoren innig vermischt und in den Reaktor gefüllt. Die Kontaktmasse wurde unter einem Stickstoffstrom von 40 l/h auf 340 °C erwärmt, um Sauerstoff- und Feuchtigkeitspuren aus dem Reaktor zu entfernen. Anschließend wurden 40 l/h Methylchlorid durch den Reaktor geleitet und die Kontaktmasse auf 395 °C erwärmt. Nach einer Induktionszeit im Bereich von 20 - 40 Minuten begann die Bildung der Methylchlorsilane, worauf die Reaktortemperatur auf 360 °C reduziert wurde. Die Zeitspanne ab diesem Zeitpunkt, bis sich 50 ml Methylchlorsilane gebildet hatten, wurde als Startphase bezeichnet; anschließend wurden weitere 30 ml Methylchlorsilane gesammelt, wobei dieser Zeitraum als Produktionsphase bezeichnet wurde.

Die Produktionsraten in mg Methylchlorsilan/g Silicium x Minuten wurden nach folgenden Formeln berechnet

$$\text{Startphase} = \frac{\text{mg Methylchlorsilan in der Startphase}}{\text{Minuten} \times (120 - \frac{\text{g Methylchlorsilan}}{4,75})}$$

$$\text{Produktionsphase} = \frac{\text{mg Methylchlorsilan in der Produktionsphase}}{\text{Minute x g Silicium in der Kontaktmasse bei Reaktionsende}}$$

Die Silanzusammensetzung während der Produktionsrate wurde mittels GC, die Kontaktmassenzusammensetzung am Ende der Reaktion mittels ICP analysiert.

Die eingesetzten Katalysatoren Antimon und Zinn wiesen eine durchschnittliche Korngröße von ca. 40 µm auf; Zinkoxid, Zink und Zinkchlorid wurden in einer durchschnittlichen Korngröße von 1 - 10 µm eingesetzt, die Kupferkatalysatoren wurden in einer mittleren Korngröße von 2 - 4 µm eingesetzt. Alle Katalysatoren - mit Ausnahme von Zinn - wiesen weniger als 200 ppm Zinnverunreinigungen auf. Der Gehalt von Alkali- und Erdalkalimetallen war bei allen Katalysatoren <0,04 Gew.-%, die Gesamtkonzentration an Barium und Strontium war <0,008 Gew.-%. Antimon, Zinn, Zink, Zinkoxid, Zinkchlorid, Cäsiumchlorid, Antimonoxid und Antimonchlorid sind käuflich erhältlich bei Alfa Johnson Matthey GmbH, Deutschland, die Kupferoxide wurden nach dem in US 5,306,328 beschriebenen Verfahren hergestellt, metallisches Kupfer wurde durch Trocknung unter Argon nach diesem Verfahren erhalten.

**Vergleichsbeispiel 1:**

Die Kontaktmassenzusammensetzung entsprach US-Re. 33452; es wurde aufgezeigt, daß mit Antimon als Katalysator unter vergleichbaren Bedingungen größere Produktionsraten erzielt werden können (siehe Beispiel 1).

Katalysatoren:

| Teiloxidiertes Kupfer $CuO_x$ mit x = 0,9; | 6 g |
|---|---|
| Zinkoxid | 1 g |
| Zinn 1000 ppm bezogen auf eingesetztes Kupferoxid | |

Produktionsrate in der Startphase: 3,03
Produktionsrate in der Produktionsphase: 2,87

Zusammensetzung der Kontaktmasse nach der Reaktion:

| 0,85 % | Kupfer |
|---|---|
| 0,25 % | Zink |
| 13 ppm | Zinn |

Silanzusammensetzung in der Produktionsphase:

| $Me_2SiHCl$: | 0,4 Gew.-% |
|---|---|
| $MeSiHCl_2$: | 0,8 Gew.-% |

(fortgesetzt)

| | |
|---|---|
| Me$_3$SiCl: | 3,7 Gew.-% |
| Me$_2$SiCl$_2$: | 83,4 Gew.-% |
| MeSiCl$_3$: | 7,2 Gew.-% |

**Vergleichsbeispiel 2:** Katalysatoren:

| | |
|---|---|
| Kupfer(II)oxid | 6 g |
| Zinkoxid | 1 g |
| Zinn 1150 ppm bezogen auf eingesetztes Kupferoxid | |

Produktionsrate: in der Startphase: 2,41
Produktionsrate in der Produktionsphase: 2,21

Zusammensetzung der Kontaktmasse nach der Reaktion:

| | |
|---|---|
| 0,84 % | Kupfer |
| 0,19 % | Zink |
| 7 ppm | Zinn |

Silanzusammensetzung in der Produktionsphase:

| | |
|---|---|
| Me$_2$SiHCl: | 0,6 Gew.-% |
| MeSiHCl$_2$: | 1,3 Gew.-% |
| Me$_3$SiCl: | 3,8 Gew.-% |
| Me$_2$SiCl$_2$: | 81,7 Gew.-% |
| MeSiCl$_3$: | 7,6 Gew.-% |

**Beispiel 1:**

Nachweis, daß Antimon höhere Produktionsraten katalysiert als Zinn (Vergleichsbeispiel 1).

Katalysatoren:

| Teiloxidiertes Kupfer $CuO_x$ mit x = 0,9; | 6 g |
|---|---|
| Zinkoxid | 1 g |
| Antimon, 1000 ppm bezogen auf eingesetztes Kupferoxid | |

Produktionsrate in der Startphase: 3,03
Produktionsrate in der Produktionsphase: 4,03

Zusammensetzung der Kontaktmasse nach der Reaktion:

| 0,77 % | Kupfer |
|---|---|
| 0,20 % | Zink |
| 16 ppm | Antimon |

Silanzusammensetzung in der Produktionsphase:

| $Me_2SiHCl$: | 0,4 Gew.-% |
|---|---|
| $MeSiHCl_2$: | 0,8 Gew.-% |
| $Me_3SiCl_2$: | 4,4 Gew.-% |
| $Me_2SiCl_2$: | 81,5 Gew.-% |
| $MeSiCl_3$: | 8,0 Gew.-% |

**Beispiel 2:**

Nachweis, daß Antimon besser Produktionsraten katalysiert als Zinn (Vergleichsbeispiel 2).

Katalysatoren:

| Kupfer(II)oxid | 6 g |
|---|---|

(fortgesetzt)

| Zinkoxid | 1 g |
|---|---|
| Antimon, 1000 ppm bezogen auf eingesetztes Kupferoxid | |

Produktionsrate in der Startphase: 3,04
Produktionsrate in der Produktionsphase: 4,39

Zusammensetzung der Kontaktmasse nach der Reaktion:

| 1,46 % | Kupfer |
|---|---|
| 0,36 % | Zink |
| 14 ppm | Antimon |

Silanzusammensetzung in der Produktionsphase:

| $Me_2SiHCl$: | 0,2 Gew.-% |
|---|---|
| $MeSiHCl_2$: | 0,9 Gew.-% |
| $Me_3SiCl_2$: | 3,6 Gew.-% |
| $Me_2SiCl_2$: | 81,9 Gew.-% |
| $MeSiCl_3$: | 7,5 Gew.-% |

**Vergleichsbeispiel 3**

Nachweis, daß durch den Einsatz von metallischem Zink im Vergleich zum Zinkoxid geringere Produktionsraten erzielt werden, und daß Zink in diesem Falle verstärkt aus der Kontaktmasse ausgetragen wird (Vergleich mit Beispiel 1, Vortrag von Lieske et al.)

Katalysatoren:

| Teiloxidiertes Kupfer $CuO_x$ mit x = 0,9; | 6 g |
|---|---|
| Zink | 0,8 g |
| Antimon, 1000 ppm bezogen auf eingesetztes Kupferoxid | |

Produktionsrate in der Startphase: 3,14
Produktionsrate in der Produktionsphase: 3,39

Zusammensetzung der Kontaktmasse nach der Reaktion:

| 1,08 % | Kupfer |
|--------|--------|
| 0,07 % | Zink |
| 22 ppm | Antimon |

Silanzusammensetzung in der Produktionsphase:

| $Me_2SiHCl$: | 0,3 Gew.-% |
|--------------|------------|
| $MeSiHCl_2$: | 0,7 Gew.-% |
| $Me_3SiCl_2$: | 5,4 Gew.-% |
| $Me_2SiCl_2$: | 80,2 Gew.-% |
| $MeSiCl_3$: | 8,7 Gew.-% |

**Vergleichsbeispiel 4:**

Nachweis, daß durch den Einsatz von $ZnCl_2$ im Vergleich zum Zinkoxid geringere Produktionsraten erzielt werden, und daß in diesem Falle verstärkt Zink aus der Kontaktmasse ausgetragen wird (Vergleich mit Beispiel 1).

Katalysatoren:

| Teiloxidiertes Kupfer $CuO_x$ mit x = 0,9; | 6 g |
|---------------------------------------------|-----|
| Zinkchlorid | 1,7 g |
| Antimon, 1000 ppm bezogen auf eingesetztes Kupferoxid | |

Produktionsrate in der Startphase: 0,96 - Der Versuch wurde nach 4 Stunden abgebrochen, die Produktionsphase wurde nach 4 Stunden nicht erreicht.

Zusammensetzung der Kontaktmasse nach Abbruch der Reaktion:

| 1,74 % | Kupfer |
|---|---|
| 0,09 % | Zink |
| 34 ppm | Antimon |

**Vergleichsbeispiel 5:**

Nachweis, daß durch Zusatz von CsCl zu einer Si/CuO$_x$/ZnO/Sn-Kontaktmasse keine höheren Produktionsraten als bei Antimonkatalysierten Massen auftreten, mit dem Unterschied, daß im Falle des Antimons alle Nachteile einer hohen CsCl-Dosierung entfallen (Vergleich mit US-A-4,661,413).

Katalysatoren:

| Teiloxidiertes Kupfer CuO$_x$ mit x = 9; | 6 g |
|---|---|
| Zinkoxid | 1 g |
| Zinn, 1300 ppm bezogen auf eingesetztes Kupferoxid Cäsiumchlorid | 0,85 g |

Produktionsrate in der Startphase: 3,2
Produktionsrate in der Produktionsphase: 3,99

Zusammensetzung der Kontaktmasse nach der Reaktion:

| 2,00 % | Kupfer |
|---|---|
| 0,29 % | Zink |
| 42 ppm | Zinn |

Silanzusammensetzung in der Produktionsphase:

| Me$_2$SiHCl: | 0,1 Gew.-% |
|---|---|
| MeSiHCl$_2$: | 1,6 Gew.-% |
| Me$_3$SiCl: | 1,2 Gew.-% |

(fortgesetzt)

| Me$_2$SiCl$_2$: | 87,8 Gew.-% |
|---|---|
| MeSiCl$_3$: | 5,9 Gew.-% |

**Beispiel 3:**

Katalysatoren:

| Teiloxidiertes Kupfer CuO$_x$ mit x = 0,8; | 6 g |
|---|---|
| Zinkoxid | 1,5 g |
| Antimon, 1500 ppm bezogen auf eingesetztes Kupferoxid | |

Produktionsrate in der Startphase: 2,90
Produktionsrate in der Produktionsphase: 4,23

Zusammensetzung der Kontaktmasse nach der Reaktion:

| 1,15 % | Kupfer |
|---|---|
| 0,37 % | Zink |
| 34 ppm | Antimon |

Silanzusammensetzung in der Produktionsphase:

| Me$_2$SiHCl: | 0,4 Gew.-% |
|---|---|
| MeSiHCl$_2$: | 0,8 Gew.-% |
| Me$_3$SiCl: | 4,6 Gew.-% |
| Me$_2$SiCl$_2$: | 80,4 Gew.-% |
| MeSiCl$_3$: | 8,4 Gew.-% |

**Vergleichsbeispiel 6:**

Nachweis, daß ohne Zn-Zusatz keine entsprechenden Produktionsraten erzielt werden können.

Katalysatoren:

| Teiloxidiertes Kupfer $CuO_x$ mit x = 0,9; | 6 g |
|---|---|
| Antimon, 1000 ppm bezogen auf eingesetztes Kupferoxid | |

Produktionsrate in der Startphase: 0,04 - Der Versuch wurde nach 4 Stunden abgebrochen, die Produktionsphase wurde nach 4 Stunden nicht erreicht.

Zusammensetzung der Kontakmasse nach Abbruch der Reaktion:

| 1,10 % | Kupfer |
|---|---|
| 32 ppm | Antimon |

**Vergleichsbeispiel 7, 8:**

Nachweis, daß beim Einsatz von metallischem Antimon höhere Produktionsraten erzielbar sind, als beim Einsatz von Antimonverbindungen.

Katalysatoren:

| Teiloxidiertes Kupfer $CuO_x$ mit x = 0,9; | 6 g |
|---|---|
| Zinkoxid | 1 g |

Vergleichsbeispiel 7:

Antimonoxid, 1400 ppm bezogen auf Kupferoxid - als Antimonmetall berechnet.

Vergleichsbeispiel 8:

Antimon(III)chlorid, 1400 ppm bezogen auf Kupferoxid, als Antimonmetall berechnet.

Produktionsrate in der Startphase:

| Vergleichsbeispiel 7: | 2,64 |
|---|---|
| Vergleichsbeispiel 8: | 1,57 |

In Vergleichsbeispiel 8 wurde die Produktionsphase nach 4 Stunden Reaktionszeit nicht erreicht, die Umsetzung wurde nach 4 Stunden abgebrochen.

Produktionsrate in der Produktionsphase bei Vergleichsbeispiel 7: 3,13

Zusammensetzung der Kontaktmasse nach der Reaktion:

| Vergleichsbeispiel 7 | Vergleichsbeispiel 8 | |
|---|---|---|
| 1,16 Gew.-% | 1,47 Gew.-% | Kupfer |
| 0,21 Gew.-% | 0,24 Gew.-% | Zink |
| 18 ppm | 45 ppm | Antimon |

Silanzusammensetzung in der Produktionsphase Vergleichsbeispiel 7:

| | |
|---|---|
| $Me_2SiHCl$: | 0,5 Gew.-% |
| $MeSiHCl_2$: | 1,2 Gew.-% |
| $Me_3SiCl$: | 3,2 Gew.-% |
| $Me_2SiCl_2$: | 82,1 Gew.-% |
| $MeSiCl_3$: | 7,1 Gew.-% |

**Vergleichsbeispiel 9:**

Nachweis, daß beim Einsatz von metallischem Kupfer geringere Produktionsraten und geringere Dimethyldichlorsilan-Selektivitäten erzielt werden als beim Einsatz von Kupferoxiden.

Katalysatoren:

| Metallisches Kupfer | 4,8 g |
|---|---|
| Zinkoxid | 1 g |
| Antimon, 1250 ppm bezogen auf eingesetztes Kupfer | |

Produktionsrate in der Startphase: 2,43
Produktionsrate in der Produktionsphase: 2,00

Zusammensetzung der Kontaktmasse nach der Reaktion:

| | |
|---|---|
| 2,93 % | Kupfer |
| 0,60 % | Zink |
| 40 ppm | Antimon |

Silanzusammensetzung in der Produktionsphase:

| | |
|---|---|
| $Me_2SiHCl$: | 1,1 Gew.-% |
| $MeSiHCl_2$: | 3,3 Gew.-% |
| $Me_3SiCl$: | 3,6 Gew.-% |
| $Me_2SiCl_2$: | 75,6 Gew.-% |
| $MeSiCl_3$: | 13,0 Gew.-% |

**Patentansprüche**

1. Verfahren zur Herstellung von Methylchlorsilanen durch Umsetzung von Methylchlorid mit Silicium in Gegenwart einer Katalysatorkombination aus Kupferoxid, Zinkoxid und metallischem Antimon.

2. Verfahren nach Anspruch 1, wobei 0,5 bis 10 Gew.-%, Kupferoxid, bezogen auf eingesetztes Silicium verwendet werden.

3. Verfahren nach Anspruch 1 oder 2, wobei 0,5 bis 60 Gew.-% Zinkoxid, bezogen auf Kupferoxid eingesetzt werden.

4. Verfahren nach einem der Ansprüche 1 bis 3, wobei 200 bis 8000 ppm Antimon, bezogen auf Kupferoxid eingesetzt werden.

**Claims**

1. Process for preparing methylchlorosilanes by reaction of methyl chloride with silicon in the presence of a catalyst combination of copper oxide, zinc oxide and metallic antimony.

2. Process according to Claim 1, wherein the amount of copper oxide used is from 0.5 to 10 % by weight, based on silicon used.

3. Process according to Claim 1 or 2, wherein the amount of zinc oxide used is from 0.5 to 60 % by weight, based on copper oxide.

4. Process according to any one of Claims 1 to 3, wherein the amount of antimony used is from 200 to 8000 ppm, based on copper oxide.

**Revendications**

1. Procédé de préparation de méthylchlorosilanes par réaction de chlorure de méthyle avec du silicium en présence d'une combinaison de catalyseurs à base d'oxyde de cuivre, d'oxyde de zinc et d'antimoine métallique.

2.  Procédé selon la revendication 1, dans lequel on emploie de 0,5 à 10% en poids d'oxyde de cuivre, par rapport au silicium utilisé.

3.  Procédé selon la revendication 1 ou 2, dans lequel on emploie de 0,5 à 60% en poids d'oxyde de zinc, par rapport à l'oxyde de cuivre.

4.  Procédé selon l'une quelconque des revendications 1 à 3, dans lequel on emploie de 200 à 8000 ppm d'antimoine, par rapport à l'oxyde de cuivre.